(19) Europäisches Patentamt

European Patent Office

Office européen des brevets

(11) Publication number: **0 262 951 B1**

(12) **EUROPEAN PATENT SPECIFICATION**

(45) Date of publication of patent specification: **15.04.92**  (51) Int. Cl.⁵: **G01V 1/38**

(21) Application number: **87308667.2**

(22) Date of filing: **30.09.87**

(54) **Floats for use in seismic surveys of sub-sea geology.**

(30) Priority: **01.10.86 GB 8623539**

(43) Date of publication of application:
**06.04.88 Bulletin 88/14**

(45) Publication of the grant of the patent:
**15.04.92 Bulletin 92/16**

(84) Designated Contracting States:
**DE FR GB NL**

(56) References cited:
**EP-A- 0 018 053**
**EP-A- 0 168 959**
**GB-A- 2 152 216**

(73) Proprietor: **Simon-Horizon Limited**
**Horizon House Azalea Drive**
**Swanley, Kent BR8 8JR(GB)**

(72) Inventor: **Rusell, David Robert**
**2 Dorothy Cottages Steels Lane**
**Oxshott Surrey(GB)**
Inventor: **Hibben, Terrance John**
**The Brontes Wrens Road**
**Borden Kent(GB)**

(74) Representative: **Abrams, Michael John et al**
**HASELTINE LAKE & CO. Hazlitt House 28**
**Southampton Buildings Chancery Lane**
**London WC2A 1AT(GB)**

## Description

This invention relates to floats which are used to support seismic energy sources at a known, predetermined depth below the sea surface.

In seismic surveying of sub-sea geology, rows of seismic energy sources are towed behind a survey vessel, and are actuated to generate seismic waves which are propagated through the sea to the sea bed, and thence down to sub-sea geological strata. Reflected waves return through the same media to detecting devices, which are also towed by the survey vessel. During surveying operations, it is important to know the precise location of the sources and detectors, and to maintain these in a predetermined orientational relationship.

In the past, a variety of techniques for suspending seismic sources beneath the surface of the sea have been employed. In many cases, problems have arisen because of the numerous lines required to pass between the survey vessel and the seismic sources. These lines can easily become entangled, particularly if one of a series of seismic sources is to be moved relative to the others, for example during deployment or retrieval.

Where floats have been used to support a plurality of seismic sources, problems can also arise in steering the floats as the survey vessel traverses the area of interest. Such active steering is desirable in order to maintain the proper spatial relationship between the various seismic energy sources and also between the sources and detectors.

GB 2152216A proposes a float for use in seismic surveys of the seam bed, the float being characterised as an elongated body made of a rigid material connected in use to the survey vessel via a towing cable connected to the float on one side thereof at a distance behind the front end of the float, and extending between the float and towing cable a regulating line whose length can be adjusted by a motor provided in the front section of the float. The float is constructed in sections. A series of seismic energy sources are suspended from the float and can be raised or lowered by the action of a second motor located in the float.

EP-0168959A discloses a bi-planar pontoon paravane for a seismic source system in which the angle of attack of the paravane can be remotely adjusted be means of a bridle connected to the towing line. The bridle is adjusted by means of a motor acting on a rack and pinion, the ends of the bridle being attached to opposite ends of the rack.

EP-0018053A discloses seismic exploration equipment comprising a series of floats arranged on streamers. The leading float of each streamer is steerable by means of a rudder.

We have found that, in practice, an arrangement of the type disclosed in GB 2152216A does not provide adequate manoeuvrability for individual floats and may still lead to problems, e.g. snagging of lines, during deployment or retrieval of a given float.

According to the present invention, there is provided a float for use in seismic surveys of subsea geology, which is constructed in sections and comprises a forward, elongate, rigid float member; a rear, elongate, rigid float member; and an attachment point for connecting the float to a towing cable, characterised by an adjustable articulating joint connecting said forward and rear float members; and means for controlling said joint so as to permit the forward and rear float members to adopt and maintain predetermined angular positions with respect to one another.

Preferably, there is a single attachment point located on one side of the front (i.e. forward) member of the float. Alternatively, and less preferably, the float may be attached to the towing cable by two lines of fixed total length, one line being connected to each of the forward and rear float members on a common side thereof.

The articulating joint is actuated by a control device which enables the joint to adopt any desired angle between the axes of the forward and rear float members. The control means also maintains the articulating joint in a given orientation until commanded to change that orientation.

For a better understanding of the invention, and to show how the same may be carried into effect, reference will now be made, by way of example, to the accompanying drawings, in which:

FIGURE 1 is a schematic plan view showing a float in accordance with the invention under tow;

FIGURE 2 is a schematic side elevational view showing the float of Figure 1 and the array of seismic energy sources supported thereby; and

FIGURE 3 is a scematic plan view of an alternative embodiment of a float in accordance with this invention.

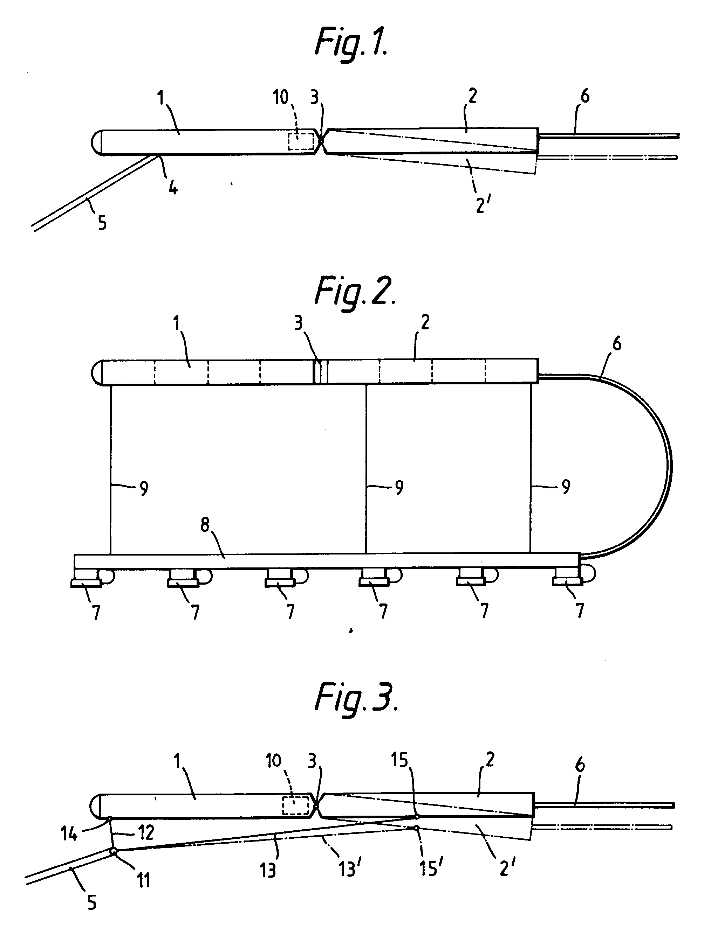

Referring to Figures 1 and 2 of the drawings, the float comprises a forward member 1 and a rear member 2 articulated together by a joint 3. Each of the forward and rear members 1 and 2 is rigid and elongate. The forward member 1 carries an attachment point 4 which is connected to towing line 5. At the rear end of rear float member 2 there is a lead-in line 6 which serves, inter alia, to supply working substance (e.g. compressed air) to seismic energy sources 7 which are supported, as shown in Figure 2, by the float at a predetermined level beneath the sea surface. Each of the sources 7 is secured to a rigid beam 8 which in turn is connected at three locations to the float via lines 9.

Disposed within front float member 1 is a control means 10 for joint 3. Control means 10 may be for example a hydraulic or pneumatic valve which is capable of maintaining float members 1 and 2 in a given orientation against the forces experienced at the sea surface.

As illustrated, the front float member 1 and the rear float member 2 are substantially equal in length and in width. Other size ratios may alternatively be employed.

In the embodiment illustrated in Figure 3, instead of a single connection with towing line 5 at the point 4 on the forward member 1, there are two connection points 14 and 15 respectively located on the forward and rear members 1 and 2 of the float. Line 5 carries a loop 11 through which lines 12 and 13 pass, the combined length of lines 12 and 13 being constant. Otherwise, this embodiment is identical to that described above with reference to Figures 1 and 2.

When articulating joint 3 is influenced by control means 10 to adjust the axial alignment of members 1 and 2, the effect is as shown in dashed lines in Figure 1, with rear float member taking up a new position 2' (and, in the embodiment of Figure 3, line 15 correspondingly taking up position 15'). When the two parts 1 and 2 of the float are not in axial alignment with one another, the float structure acts as a paravane and this facilitates active steering of the float.

Control means 10 preferably acts on joint 3 either hydraulically (using oil as the working substance) or mechanically (e.g. via a screw or rack and pinion arrangement). Power to control either the hydraulic or mechanical connection is preferably provided pneumatically, or hydraulically with water as the working substance. If the seismic energy sources 7 are air guns, then pneumatic power will be readily available for control means 10. Alternatively, if seismic energy sources 7 are water guns, then hydraulic water pressure will likewise be readily available for control means 10.

Contained within compartments in the front and rear sections of the float there are a number of systems required for control and operation both of the float itself and of the array of seismic energy sources 7 suspended beneath it. In one preferred embodiment, the float compartments contain (a) a plurality of valves, manifolded and remotely operated to control the supply of working substance to the seismic energy sources; (b) an accumulator constantly charged from the survey vessel to supply the electricity required in operation of the float (the accumulator may also be charged from a propeller-driven generator or alternator); (c) electrical power supply units to trigger the seismic energy sources 7; (d) electrical power supply units for working substance pressure monitors; (e) electrical power supply units for seismic energy source depth monitors; (f) electrical power supply units for environmental monitors inside the float compartments; (g) electrical power supply units for radio positioning equipment; and (h) electrical power supply units for acoustic positioning devices. In practice, information gathered from units (d)-(h), together with information gathered from sensors in or near the seismic energy sources, can be transmitted from the float to the towing vessel in analogue form or as digital data from a data acquisition unit in the float. Digital data transmission may be effected either via an electrical cable located in towing cable 8 or by a radio device.

Control of individual seismic energy sources 7 may be effected either by a command from the towing vessel to the respective source via an electrical cable in towing cable 5, or by a device located in the float which receives the necessary information from a computerised controller located on the towing vessel via a radio link.

Instead of deploying seismic energy sources 7 as shown in Figure 2, the float may be used to deploy a hydrophone streamer (not shown) which will extend rearwardly from a rigid beam (analogous to beam 8) suspended from the float by lines (analogous to lines 9) generally as shown in Figure 2.

## Claims

1. A float for use in seismic surveys of sub-sea geology, which is constructed in sections and comprises a forward, elongate, rigid float member (1); a rear, elongate, rigid float member (2); and an attachment point (4) for connecting the float to a towing cable (5), characterised by an adjustable articulating joint (3) connecting said forward and rear float members (1, 2); and means (10) for controlling said joint (3) so as to permit the forward and rear float members to adopt and maintain predetermined angular positions with respect to one another.

2. A float as claimed in claim 1, characterised in that there is a single attachment point (4) located on one side of the forward float member (1).

3. A float as claimed in claim 1, characterised in that the float is adapted to be attached to the towing cable (5) by two lines (12, 13) of fixed total length, one line being connected to each of the forward and rear float members (1, 2) on a common side thereof.

4. A float as claimed in claim 1, 2 or 3, characterised in that the means for controlling said articulating joint (3) is a hydraulic or pneumatic valve (10).

5. A float as claimed in claim 1, 2 or 3, characterised in that the means (10) for controlling said articulating joint (3) comprises a mechanical linkage actuated by hydraulic or pneumatic power.

6. A float as claimed in claim 5, characterised in that said mechanical linkage is a screw or a rack and pinion device.

7. A float as claimed in any preceding claim, characterised in that it is provided with compartments in its front and rear members (1, 2) which compartments house systems required for control and operation of the float itself and of an array of seismic energy sources suspended beneath it.

8. A float as claimed in claim 7, characterised in that the float compartments contain (a) a plurality of valves, manifolded and remotely operated to control the supply of working substance to seismic energy sources suspended beneath the float; (b) an accumulator to supply electricity required in operation of the float; and (c) one or more electrical power supply units.

9. A float as claimed in claim 8, characterised in that said compartments include one or more of: (a) electrical power supply units to trigger said seismic energy sources; (b) electrical power supply units for working substance pressure monitors; (c) electrical power supply units for seismic energy source depth monitors; (d) electrical power supply units for environmental monitors inside the float compartments; (e) electrical power supply units for radio positioning equipment; and (f) electrical power supply units for acoustic positioning devices.

**Revendications**

1. Flotteur pour l'utilisation en mesures sismiques de la géologie sous-marine qui est construit en sections et comporte un élément flottant rigide allongé avant (1), un élément flottant rigide allongé arrière (2) ; et un point d'attache (4) pour connecter le flotteur à un câble d'amarrage (5), caractérisé par un assemblage (3) articulé ajustable connectant lesdits éléments flottants (1, 2) avant et arrière ; et des moyens (10) pour contrôler ledit assemblage (3) de façon à permettre aux éléments flottants avant et arrière d'adopter et de maintenir des positions angulaires prédéterminées l'un par rapport à l'autre.

2. Flotteur selon la revendication 1, caractérisé en ce qu'il y a un seul point d'attache (4) disposé d'un côté de l'élément flottant avant (1).

3. Flotteur selon la revendication 1, caractérisé en ce que le flotteur est destiné à être attaché au câble d'amarrage (5) par deux lignes (12 et 13) de longueur totale fixée, une ligne étant connectée à chacun des éléments flottants (1 et 2) avant et arrière sur un côté commun.

4. Flotteur selon la revendication 1, 2, ou 3, caractérisé en ce que les moyens pour contrôler ledit assemblage articulé (3) est une vanne hydraulique ou pneumatique (10).

5. Flotteur selon l'une des revendications 1, 2 ou 3, caractérisé en ce que le moyen (10) pour contrôler ledit assemblage articulé (3) comporte une liaison mécanique actionnée par un entraînement hydraulique ou pneumatique.

6. Flotteur selon la revendication 5, caractérisé en ce que ladite liaison mécanique est un dispositif à vis ou à pignon-crémaillère.

7. Flotteur selon l'une quelconque des revendications précédentes, caractérisé en ce qu'il est muni de compartiments dans ses éléments avant et arrière (1, 2), lesquels compartiments qui abritent les systèmes exigés pour le contrôle et le fonctionnement du flotteur lui-même et d'un réseau de sources d'énergie sismique suspendues par dessous.

8. Flotteur selon la revendication 7, caractérisé en ce que les compartiments du flotteur contiennent (a) une pluralité de vannes alimentées et actionnées à distance pour contrôler l'alimentation d'une substance de travail aux sources d'énergie sismique suspendues en dessous du flotteur ; (b) un accumulateur pour fournir l'électricité exigée pour le fonctionnement du flotteur et (c) au moins une unité d'alimentation en énergie électrique.

9. Flotteur selon la revendication 8, caractérisé en ce que lesdits compartiments comprennent au moins l'un parmi ; (a) des unités d'alimentation en énergie électrique pour déclencher lesdites sources d'énergie sismique ; (b) des unités d'alimentation en énergie électrique pour des moniteurs de pression de substance de travail ; (c) des unités d'alimentation en énergie électrique pour les moniteurs de profondeur de sources d'énergie sismique ; (d) des unités d'alimentation en énergie électrique pour des moniteurs d'environnement à l'intérieur des compartiments du flotteur ; (e) des unités d'alimentation en énergie électrique pour l'équipement de localisation radio ; et (f) des unités d'alimentation en énergie électrique pour les dispositifs de localisation acoustique.

**Patentansprüche**

1. Aus einzelnen Abschnitten aufgebauter Schwimmer für seismische Messungen in der Unterwassergeologie, mit einem vorderen langgestreckten starren Schwimmerglied (1), einem hinteren starren langgestreckten Schwimmerglied (2) und einem Befestigungspunkt (4) für die Verbindung mit einem Schlepptau (5), gekennzeichnet durch eine einstellbare Gelenkkupplung (3), die das vordere und das hintere Schwimmerglied (1, 2) miteinander verbindet, und durch ein Mittel (10) zur Steuerung dieser Kupplung (3) in einer Weise, die es dem vorderen und dem hinteren Schwimmerglied ermöglicht, vorbestimmte Winkelposition zueinander einzunehmen und beizubehalten.

2. Schwimmer nach Anspruch 1, dadurch gekennzeichnet, daß ein einziger Befestigungspunkt (4) vorgesehen ist, der sich auf einer Seite des vorderen Schwimmerglieds (1) befindet.

3. Schwimmer nach Anspruch 1, dadurch gekennzeichnet, daß er mit zwei Leinen (12, 13) mit fester Gesamtlänge an dem Schlepptau (5) befestigbar ist, wobei jeweils eine dieser Leinen mit dem vorderen und dem hinteren Schwimmerglied (1 bzw. 2) auf einer gemeinsamen Seite derselben verbunden ist.

4. Schwimmer nach Anspruch 1, 2 oder 3, dadurch gekennzeichnet, daß das Mittel zur Steuerung der gelenkigen Kupplung (3) ein hydraulisches oder ein pneumatisches Ventil (10) ist.

5. Schwimmer nach Anspruch 1, 2 oder 3, dadurch gekennzeichnet, daß das Mittel (10) zur Steuerung der gelenkigen Kupplung (3) eine durch hydraulische oder pneumatische Kraft betätigte mechanische Getriebeanordnung umfaßt.

6. Schwimmer nach Anspruch 5, dadurch gekennzeichnet, daß die mechanische Getriebeanordnung aus einem Schnecken- oder einem Zahnstangengetriebe besteht.

7. Schwimmer nach einem der vorhergehenden Ansprüche, dadurch gekennzeichnet, daß in seinem vorderen und hinteren Schwimmerglied (1, 2) Kammern vorgesehen sind, die Systeme für die Steuerung und Betätigung des Schwimmers selbst und einer Feldanordnung von unter ihm aufgehängten seismischen Energiequellen beherbergen.

8. Schwimmer nach Anspruch 7, dadurch gekennzeichnet, daß die Kammern enthalten: (a) eine Mehrzahl von verzweigten und ferngesteuerten Ventilenzur Steuerung der Zufuhr von Arbeitsmedium zu den unter dem Schwimmer aufgehängten seismischen Energiequellen, (b) einen Akkumulator für die zur Betätigung des Schwimmers benötigte Stromversorgung und (c) eine oder mehrere elektrische Stromversorgungseinheiten.

9. Schwimmer nach Anspruch 8, dadurch gekennzeichnet, daß die Kammern enthalten: (a) eine oder mehrere Stromversorgungseinheiten zum Zünden der seismischen Energiequellen, (b) eine oder mehrere Stromversorgungseinheiten für Monitore zur Drucküberwachung des Arbeitsmediums, (c) eine oder mehrere Stromversorgungseinheiten für Monitore zur Überwachung der Tiefe der der seismischen Energiequellen, (d) eine oder mehrere Stromversorgungseinheiten für die Umgebungsüberwachung innerhalb der Kammern, (e) eine oder mehrere Stromversorgungseinheiten für eine Ausrüstung zur Funk-Positionierung und (f) eine oder mehrere Stromversorgungseinheiten für akustische Positionierungseinrichtungen.-

EP 0 262 951 B1

*Fig.1.*

*Fig.2.*

*Fig.3.*

6